# EUROPEAN PATENT APPLICATION

(11) **EP 1 909 520 A1**
(43) Date of publication of application: **09.04.2008**
(21) Application number: 06020726.3
(22) Date of filing: 02.10.2006
(51) Int. Cl.: H04Q 7/38

(54) **Transmission and reception of system information upon changing connectivity or point of attachment in a mobile communication system**

(71) Applicant: MATSUSHITA ELECTRIC INDUSTRIAL CO., LTD., Osaka 571-8501 (JP)
(72) Inventor: Petrovic, Dragan, 63225 Langen (DE); Aoyama, Takahisa, Matsushita El. Ind. Co., Ltd., Chuo-ku Osaka 540-6319 (JP)
(74) Representative: Grünecker, Kinkeldey, Stockmair & Schwanhäusser Anwaltssozietät

(57) **Abstract**

Method for informing a mobile terminal on target cell- specific system information to facilitate a mobility procedure such as handover or cell reselection in a mobile communication network. Further a radio resource control apparatus, a mobile terminal and a system comprising the radio resource control apparatus and the mobile terminal are provided. Improvements to current mobility procedures so as to reduce the interruption time implied by the procedures are suggested. More specifically, it is proposed to include at least one pointer to target cell-specific system information to a control message, such as a handover indication or connection release message, pointing the mobile terminal to system information in the target cell relevant for system access and/or to perform mobility procedures. Further, a portion of the target cell-specific system information may also be comprised in the control message.

## Description

### FIELD OF THE INVENTION

The present invention relates to a method for informing a mobile terminal on target cell-specific system information to facilitate a mobility procedure such as handover or cell reselection in a mobile communication network. Further a radio resource control apparatus, a mobile terminal and a system comprising the radio resource control apparatus and the mobile terminal are provided.

### TECHNICAL BACKGROUND

W-CDMA (Wideband Code Division Multiple Access) is a radio interface for IMT-2000 system (International Mobile Telecommunication system), which was standardized for use as the 3^{rd} generation wireless mobile telecommunication system. It provides a variety of services such as voice services and multimedia mobile communication services in a flexible and efficient way. The standardization bodies in Japan, Europe, USA, and other countries have jointly organized a project called the 3^{rd} Generation Partnership Project (3GPP) to produce common radio interface specifications for W-CDMA.

The standardized European version of IMT-2000 is commonly called UMTS (Universal Mobile Telecommunication System). The first release of the specification of UMTS has been published in 1999 (Release 99). In the mean time several improvements to the standard have been standardized by the 3GPP in Release 4, Release 5 and Release 6.

Recently, the 3GPP has begun considering the next major step or evolution of the 3G standard to ensure the long-term competitiveness of 3G. The 3GPP recently launched a study item "Evolved UTRA and UTRAN" better known as "Long Term Evolution (LTE)". The study will investigate means of achieving major leaps in performance in order to improve service provisioning and reduce user and operator costs. It is generally assumed that there will be a convergence toward the use of Internet Protocols (IP) in mobility control, and that all future services will be IP-based. Therefore, the focus of the evolution is on enhancements to the packet-switched (PS) domain.

The main objectives of the evolution are to further improve service provisioning and reduce user and operator costs as already mentioned. More specifically, some key performance, capability and deployment requirements for the long-term evolution (LTE) are *inter alia:*
■ significantly higher data rates compared to HSDPA and HSUPA (envisioned are target peak data rates of more than 100Mbps over the downlink and 50Mbps over the uplink),
■ high data rates with wide-area coverage,
■ significantly reduced latency in the user plane in the interest of improving the performance of higher layer protocols (for example, TCP) as well as reducing the delay associated with control plane procedures (for instance, session setup), and
■ stand-alone system operation in spectrum allocations of different sizes ranging from 1.25 MHz to 20 MHz.

One other deployment-related requirement for the long-term evolution study is to allow for a smooth migration to these technologies.

### Current and LTE UTRAN Architecture

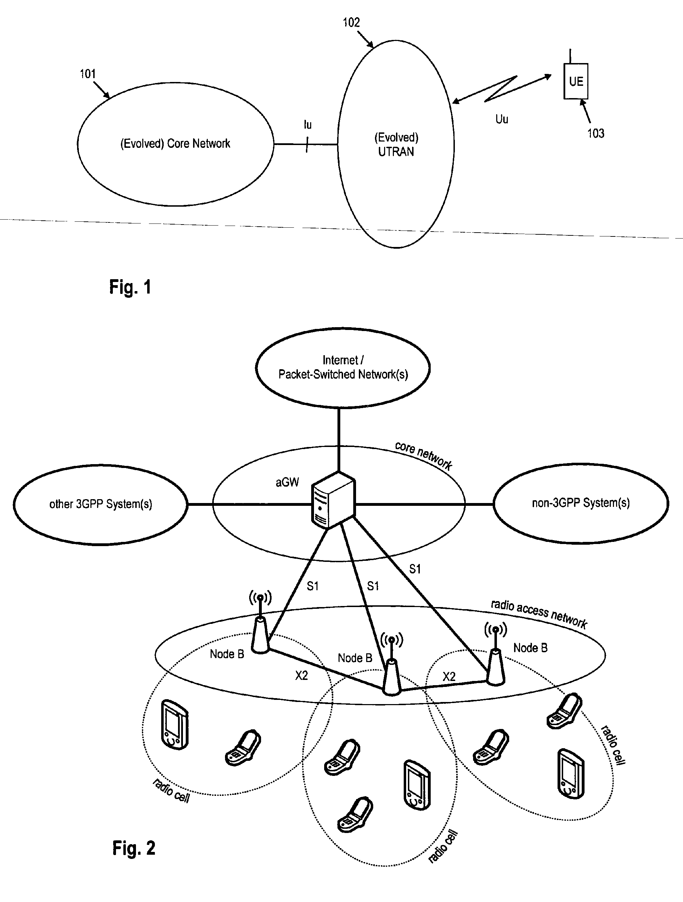

The high level Release 99/4/5/6 architecture of the Universal Mobile Telecommunication System (UMTS) is shown in Fig. 1 (see 3GPP TS 25.401: "UTRAN Overall Description", incorporated herein by reference, available from http://www.3gpp.org). The UMTS system consists of a number of network elements each having a defined function. Though the network elements are defined by their respective function, a similar physical implementation of the network elements is common but not mandatory.

The network elements are functionally grouped into the Core Network (CN) 101, the UMTS Terrestrial Radio Access Network (UTRAN) 102 and the User Equipment (UE) 103. The UTRAN 102 is responsible for handling all radio-related functionality, while the CN 101 is responsible for routing calls and data connections to external networks. The interconnections of CN/UTRAN and UTRAN/UE are defined by open interfaces (Iu, Uu respectively). It should be noted that UMTS system is modular and it is therefore possible to have several network elements of the same type.

In the sequel two different architectures will be discussed. They are defined with respect to logical distribution of functions across network elements. In actual network deployment, each architecture may have different physical realizations meaning that two or more network elements may be combined into a single physical node.

Fig. 2 illustrates an exemplary overview of a 3GPP LTE mobile communication network. The network consists of different network entities that are functionally grouped into the Core Network (CN), the Radio Access Network (RAN) and the User Equipments (UEs) or mobile terminals. The RAN is responsible for handling all radio-related functionality inter alia including scheduling of radio resources. The CN may be responsible for routing calls and data connections to external networks.

The LTE network is a "two node architecture" consisting of Access Gateways (aGW) and Node Bs (also referred to as enhanced Node Bs, eNode Bs or eNBs). The aGW will handle CN functions, i.e. routing calls and data connections to external networks, and also implement RAN functions. Thus, the aGW may be considered as to combine some of the functions performed by SGSN and RNC in today's 3G networks and RAN functions as for example header compression, ciphering/integrity protection. The Node Bs may handle functions as for example Radio Resource Control (RRC), segmentation/concatenation, scheduling and allocation of resources, multiplexing and physical layer functions.

A mobile communication network is typically modular and it is therefore possible to have several network entities of the same type. The interconnections of network elements are defined by open interfaces. UEs can connect to a Node Bs via the air interface denoted as Uu interface. The Node Bs may have a connection to an aGW via the so-called S1 interface. The Node Bs are interconnected via the so-called X2 interface.

Both 3GPP and Non-3GPP integration may be handled via the aGW's interface to the external packet data networks (e.g. Internet).

As already indicated above, in the exemplary network architecture of Fig. 2, it is assumed that the ownership of the cell resources is handled in each Node B. Having the cell resource ownership outside the aGW makes it possible to support pooling of aGW (of both CP / UP flows), allowing one Node B to be connected to several aGWs for different terminals (thus avoiding a single point of failure).

### UTRA Radio Interface Protocol architecture

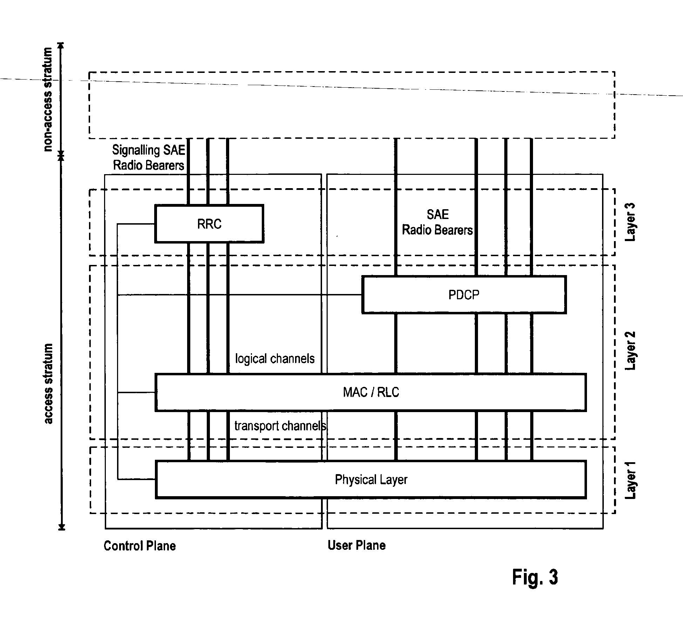

An overview of the radio interface protocol architecture of the UTRAN is shown in Fig. 3. Generally, the radio interface protocol architecture of the UTRAN implements Layers 1 to 3 of the OSI protocol stack. The protocols terminated in the UTRAN are also referred to as the access stratum protocols. In contrast to the access stratum, all protocols not terminated in the UTRAN are typically also referred to as the non-access stratum protocols.

The vertical split of the protocols into user plane and control plane is highlighted in Fig. 3. The Radio Resource Control (RRC) protocol is a Layer 3 protocol of the control plane which controls the protocols in the lower layers of the UTRA Radio Interface (Uu).

The RRC protocol is typically terminated in the RNC of the UTRAN nowadays, however other network elements have also been considered for terminating the RRC protocol in the UTRAN, e.g. the Node Bs, as discussed with respect to the presently discussed LTE architecture. The RRC protocol for LTE (so called E-RRC protocol) is terminated in the Node Bs. The RRC protocol is used for signaling of control information to control access to radio resources of the radio interface to the UEs. Further, there is also the possibility that the RRC protocol encapsulates and transports non-access stratum messages, which are usually related to control within the non-access stratum.

In the control plane, the RRC protocol relays the control information to Layer 2, i.e. the Radio Link Control (RLC) protocol, via Signaling SAE Radio Bearers through Service Access Points (SAPs). In the user plane the non-access stratum protocol entities may use SAE Radio Bearers to directly access Layer 2 via SAPs. The access may be made to the RLC directly or to the Packed Data Convergence Protocol which in turn provides its PDUs to the RLC protocol entity.

The RLC offers services to the higher layers through its SAPs. The RRC configuration defines how RLC will handle the packets, e.g. whether RLC is operating in transparent, acknowledged or unacknowledged mode. The service provided to the higher layers in the control plane and user plane by the RRC or PDCP are also referred to as Signaling SAE Radio Bearer and SAE Radio Bearer, respectively.

The MAC/RLC layer in turn offers its services to the RLC layer by means of so-called logical channels. The logical channels essentially define what kind of data is transported. The physical layer offers its services to the MAC/RLC layer, the so-called transport channels. The transport channels define how and with which characteristics the data received from the MAC layer are transmitted via the physical channels.

### (Broadcast) System Information Structure

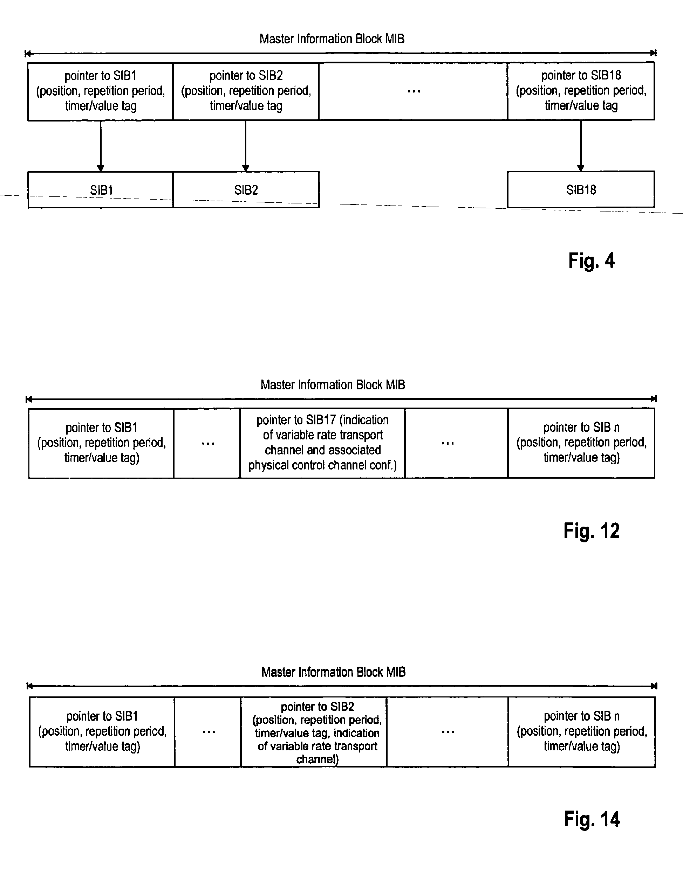

In the 3GPP terminology, (broadcast) system information is also denoted BCCH information, i.e. denotes the information carried on the Broadcast Control CHannel (being a logical channel) of the radio cell to which the UE is connected (active state) or attached (idle state). The structure of the information on the BCCH is shown in Fig. 4. Generally, system information includes a master information block (MIB) and several system information blocks (SIBs). MIB contains control information on each System Information Block. The control information associated to a respective SIB may have the following structure. Respective control information associated to a SIB may indicate the position of the SIB on a transport channel (e.g. position in the time-frequency plane for OFDM radio access i.e. particular Resource Blocks being assigned for transmission of a respective SIB) on which it is transmitted relative to common timing reference. Further, a repetition period of SIB is indicated. This repetition period indicates the periodicity at which the respective SIB is transmitted. The control information may also include a timer value for timer-based update mechanism or, alternatively, a value tag for a tag-based update of the SIB information.

The table below shows an overview of the categorization and types of system information blocks in a UMTS legacy system as defined in 3GPP TS 25.331, "Radio Resource Control (RRC)", version 6.7.0, section 8.1.1, incorporated herein by reference; available at http://www.3gpp.org). The classification of the system broadcast information into the different SIBs is based on the content and temporal variability that is indicated on the right hand column of the table.

**Table 1**

| **SIB** | **Content** | **Temporal Variability** |
|---|---|---|
| SIB1 | NAS info, UE timers/counters | low |
| SIB2 | URA identity | low |
| SIB3 | Cellselection parameters | low |
| SIB4 | Cell selection par. for connected mode | low |
| SIB5 | Common physical channels configuration | medium |
| SIB6 | Common physical channels configuration | medium |
| SIB7 | Interference/ dynamic persistence level | high |
| SIB11 | Measurement control | medium |
| SIB12 | Measurement control information for connected mode | medium |
| SIB13 | ANSI-41 info | low |
| SIB14 | Outer loop power control information | medium |
| SIB15 | Positioning information | low |
| SIB16 | Preconfiguration | medium |
| SIB17 | Configuration of shared physical channels in connected mode | high |
| SIB18 | PLMN IDs of neighboring cells | low |

### Long Term Evolution (LTE) Requirements

According to 3GPP TR 25.913, "Requirements for Evolved UTRA (E-UTRA) and Evolved UTRAN (E-UTRAN)", version 7.3.0 (available at http://www.3gpp.org and incorporated herein by reference) the Evolved UMTS Terrestrial Radio Access (E-UTRA) shall operate in spectrum allocations of different sizes, including 1.25 MHz, 2.5 MHz, 5 MHz, 10 MHz, 15 MHz and 20 MHz in both uplink and downlink. In addition, E-UTRA shall be possible to operate standalone, i.e. there is no need for any other carrier to be available signaling support from another system.

3GPP TR 25.913 also mainly aims to at significantly reduce reducing control-plane latency is one of the main objectives as indicated above. This implies that transition time between the different operating states of a UE shall be (excluding downlink paging delay and Non Access Stratum signaling delay) less than 100 ms from a camped state (e.g. the UMTS Release 6 Idle Mode or LTE_Idle state or mode) to an active state (e.g. UMTS Release 6 CELL_DCH state or LTE_Active state or mode) in such a way that the user plane is established for the UE. Generally, a UE is said to be camped on a cell if the UE is in LTE idle mode, has completed the cell selection/reselection process and has chosen a cell. In this camped state the UE monitors transport channel configured to transmit system information and (in most cases) paging information channels. In LTE_Active state, Signalling SAE Radio Bearers are established for the purpose of exchanging control information, and the UE receives User Plane information and may monitor transport channel configured to transmit system information.

### Spectrum Deployment, System Bandwidth and UE Capability

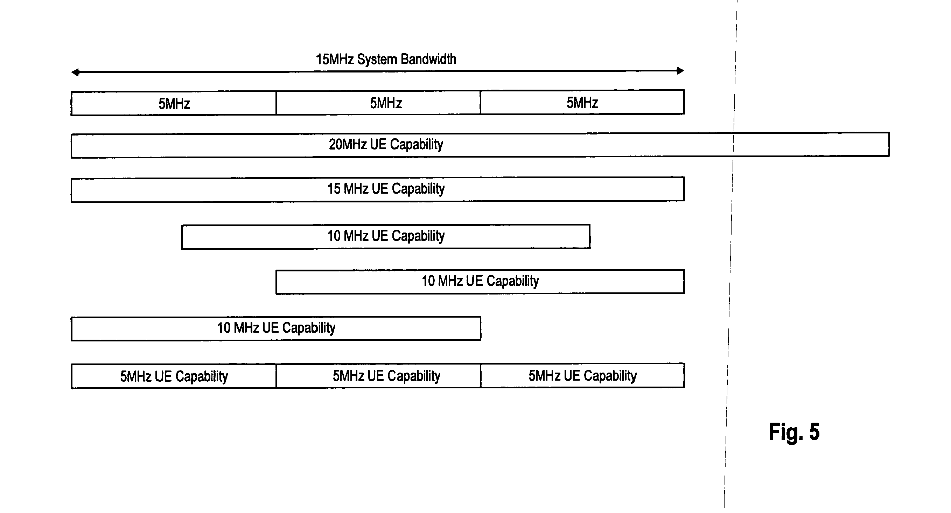

As explained above, E-UTRA should operate in a stand-alone manner in each of spectrum deployments. System bandwidth for different spectrum deployments may be equal to 1.25, 2.5, 5.0, 10.0, 15.0 and 20.0 MHz. However, for each of these system bandwidth sizes it is in turn possible to define several scenarios depending on actual position of UEs ("UE camping") with certain bandwidth capabilities in frequency domain in active mode or idle mode (referred to as LTE_Active mode and LTE_Idle mode for LTE 3GPP systems). According to current agreement in the stage II of LTE standardization, terminal bandwidth capability can be equal to at least 10 MHz. Fig. 5 illustrates exemplary deployment scenarios given the system bandwidth size of 15 MHz divided into three subbands of equal size and assuming terminal bandwidth capabilities equal to 5, 10 and 15 MHz without loosing generality of exposition.

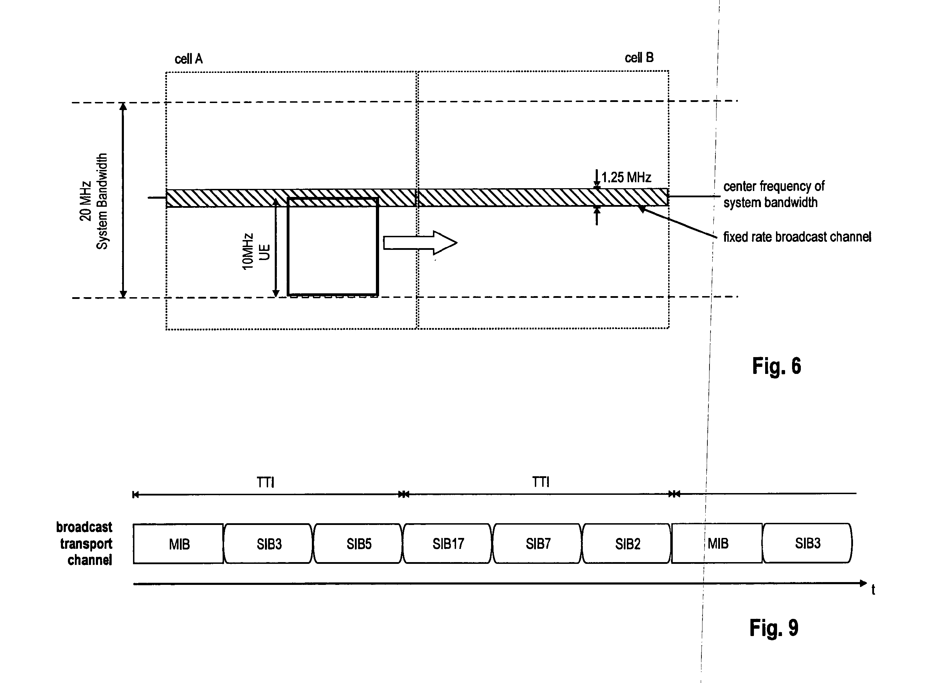

According to current decision of TSG RAN WG1 (see 3GPP TR 25.814, "Physical Layer Aspects for Evolved UTRA", version 1.4.1 - available at http://www.3gpp.org and incorporated herein by reference), broadcast system information is transmitted in the central part of the system bandwidth. As illustrated in Fig. 6, if an LTE_Active UE is positioned in upper or lower part of the system bandwidth of radio cell A, it cannot decode the system information being broadcast in the central part of the system bandwidth of the radio cell B.

### Mobility Management - Interruption Time

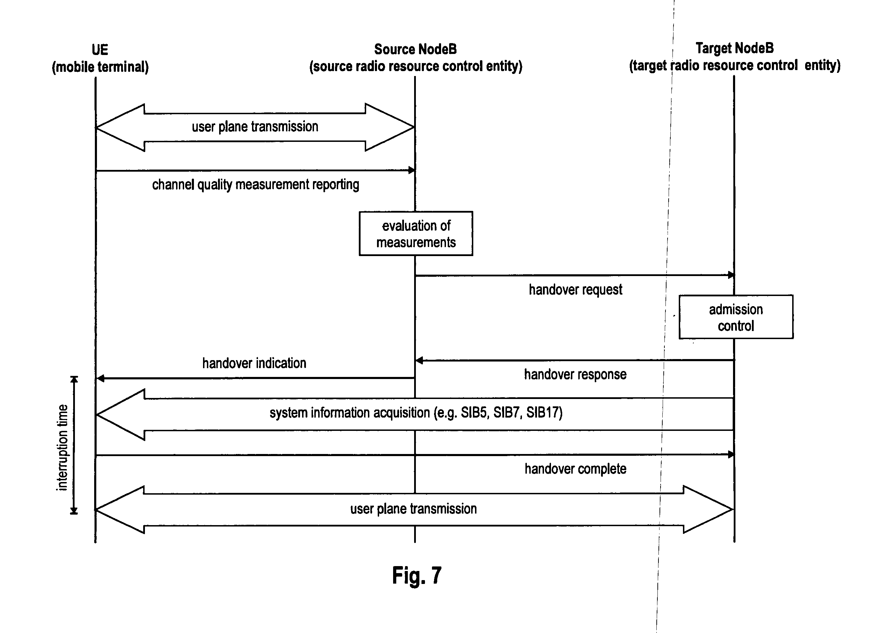

In LTE, intra-RAT (Radio Access Technology) mobility for terminals in active state or mode is realized by a Hard Handover procedure. Fig. 7 shows an exemplary Hard Handover procedure on the level of Layer 3 messages (in LTE: E-RRC protocol messages) and denotes corresponding interruption time resulting from the handover. The interruption time in which a UE has no connectivity (i.e. the time to detach from the source cell and to enter active mode in the target cell) is increased due to acquisition of system information (SIB5, SIB7 and SIB17) from the broadcast control channel of target E-Node B.

System information can be acquired only after reception of [E-RRC] HANDOVER INDICATION message. As the reception of the MIB containing scheduling information on the SIBs in the target cell is necessary to receive the relevant SIBs for system access and establishing Layer 3 connectivity, it would not be possible for the UE attaching to the taget cell to receive relevant system information (SIBs) before receiving the MIB. If the MIB was transmitted slightly before receiving the [E-RRC] HANDOVER INDICATION the UE thus needs to wait almost the entire repetition cycle of the MIB before receiving same and being able to receive the relevant SIBs for system access. This can result in increase of interruption time for app. 50 ms. Given the LTE requirement for control plane latency being less than 100 ms, this increase is significant.

Another issue is intra-RAT mobility for terminals in LTE_Idle mode. Typically, this mechanism is governed by a cell reselection procedure. Given the requirement for reduction of control plane latency and a general service-based requirement for reduction of interruption time, it is important to minimise latency in the transition chain LTE_Active (source cell)→ LTE_Idle (source cell)→ LTE_Idle (target cell)→LTE_Active (target cell) of the E-RRC state machine.

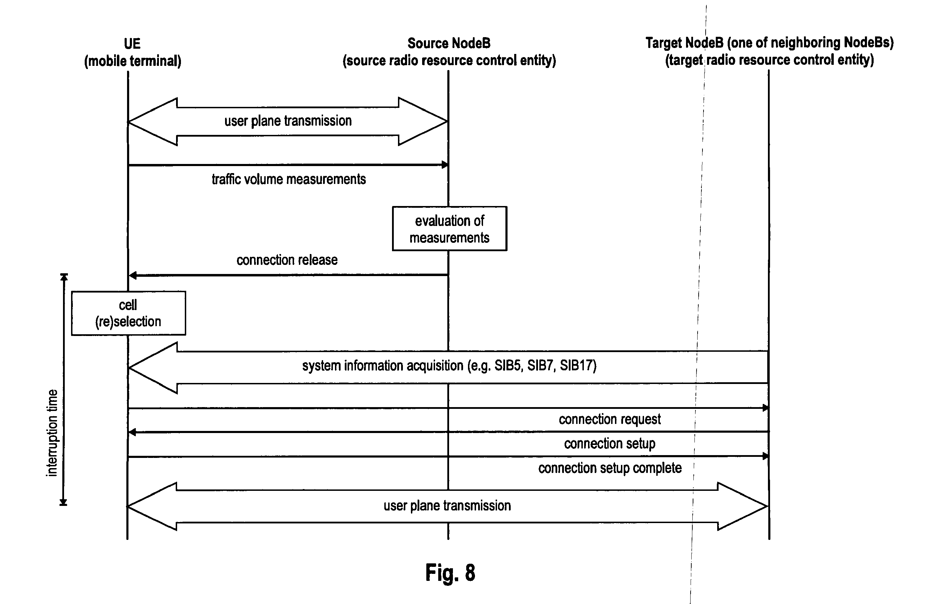

Assuming that the first part of the transition chain involves cell reselection, this translates into reducing interruption time of the cell reselection procedure as shown in Fig. 8. Similar to the hard-handover, system information can be acquired only after reception of [E-RRC] E-RRC CONNECTION RELEASE message, similar to the case described above for the handover procedure. Accordingly, the same problems and implications on control plane latency are also present in mobility management for UEs in LTE_Idle state.

Before having attached to the target cell, the UEs are not able to receive the system information on the BCCH from neighboring cells. SIBs necessary for system access in the target cell may only be received upon having decoded the MIB of the target cell, so that the latency of the mobility procedures for UEs in active or idle mode may be too high to meet the desired interruption time of approximately 100ms as defined for the LTE system.

### SUMMARY OF THE INVENTION

An object of the invention is to suggest a mechanism overcoming at least one of the problems outlined above. A more specific object of the invention is to suggest improvements to current mobility procedures so as to reduce the interruption time implied by the procedures.

One of the objects is solved by the subject matter of the independent claims. Advantageous embodiments of the invention are subject matters to the dependent claims.

According to an aspect of the invention, it is suggested to introduce a pointer to a control message (transmitted through the source cell - i.e. in the cell the mobile terminal is currently located in) informing a mobile terminal to change its point of attachment in the radio access network or to change connectivity from one radio cell to another (e.g. from a source radio cell to a target radio cell). This pointer in the control message thereby points to target cell-specific system information in the target cell. In one more specific example, the pointer in the control message may point to target cell-specific system information that is required for system access to the target cell and/or for performing a mobility procedure.

In one embodiment, the pointer may indicate scheduling information of target cell-specific system information broadcast/transmitted in the target cell. In another embodiment of the invention the pointer points to system information in the target cell that is required for system access to the target cell and/or mobility procedures, such as for example handover or cell reselection.

Another aspect of the invention (that may be advantageously combined with the aspect of including a pointer to the control message) is to increase the flexibility of transmitting system information. According thereto, system information of a cell is transmitted via a fixed rate transport channel and/or via a variable rate transport channel. Accordingly, the pointer in the control message transmitted to the mobile terminal in the source cell may indicate scheduling information, such as for example the transport format of the system information or of individual portions thereof, and/or an indication of the mapping of the system information or individual portions thereof to the fixed rate transport channel and/or the variable rate transport channel.

According to one embodiment of the invention a method for informing a mobile terminal on target cell-specific system information within a mobile communication system is provided. A mobile terminal may be instructed to change connectivity or its point of attachment from a source cell to a target cell by a control message sent from a radio resource control entity of the source cell. This control message comprises at least one pointer to target cell-specific system information within the target cell.

The target cell-specific system information may for example comprise information relevant for establishing connectivity on the air interface of the target cell or information relevant for changing a point of attachment to the target cell.

Using the at least one pointer comprised in the control message the mobile terminal may be capable to receive the target cell-specific system information in the target cell.

In another exemplary embodiment of the invention the target cell-specific system information in the target cell is mapped to a fixed rate transport channel or a variable rate transport channel. A pointer may thereby indicate the mapping of the target cell-specific system information to the fixed rate transport channel and/or the variable rate transport channel within the target cell.

In a further embodiment, a pointer may comprise a system frame number starting from which scheduling information comprising transmission format and timing for at least a portion of the target cell-specific system information is valid. The scheduling information may be for example part of the target cell-specific system information received by the mobile terminal.

Upon retransmission of the control message by a radio resource control protocol, another embodiment of the invention suggest that a medium access control protocol specific protocol data unit indicating an updated system frame number or an updated scheduling information comprising transmission format and timing of at least a portion of the target-cell specific system information is transmitted to the mobile terminal.

Thereby, a control message may for example indicate a retransmission period specifying the interval in which the target cell-specific system information is retransmitted in the target cell or an updated system frame number. Moreover, in another embodiment, mobile terminal determines an updated system frame number based on the system frame number and the retransmission period.

The fixed rate transport channel may for example be a broadcast transport channel having a fixed transport format and the variable rate transport channel may be a shared transport channel or broadcast transport channel with variable transport format.

Further, in another embodiment of the invention, the target cell-specific system information is transmitted in form of at least one system information block. In this case the pointer in the control message may indicate whether a respective system information bock is mapped on a fixed rate transport channel and/or a variable rate transport channel within a target cell.

Moreover, in case a system information block is mapped to the variable rate transport channel, the pointer may for example further indicate a transmission format and timing of a respective system information block on the variable rate transport channel. In case a system information block is mapped to the fixed rate transport channel, the pointer may for example specify the position of the respective system information block on the fixed rate transport channel in the target cell and optionally the repetition cycle at which the respective system information block is retransmitted.

In another embodiment control information associated to the variable rate transport channel is transmitted on a control channel to the mobile terminal within the target cell-This control information may indicate the transmission format and timing of a respective system information block transmitted on the variable rate transport channel. Moreover, the control information may comprise identification of the logical channel to transport channel mapping.

In another embodiment of the invention, the pointer to the target cell-specific system information comprises information on the configuration of at least one variable rate transport channel to which at least a portion of the target cell-specific system information is mapped.

According to a further embodiment, the control message may comprise a portion of the target cell-specific system information, e.g. one or more system information blocks.

In another embodiment, at least a portion of the target cell-specific system information is simultaneously transmitted on at least two different resource blocks of the air interface of the mobile communication system. This portion may for example correspond to information of at least one system information block.

In one embodiment of the invention, the control message instructs the mobile terminal to attach to one out of plural potential neighboring cells.

In another embodiment of the invention, the radio resource control entity controlling the source cell may receive from a radio resource control entity controlling a neighboring cell at least one pointer to neighboring cell-specific system information. This at least one pointer may be received by the radio resource control entity of the source cell from the radio resource control protocol of the target cell for example via a frame protocol or application protocol message. In a variation of this embodiment, there is a direct interface provided between the two radio resource control entities, such a - for the LTE system case - the X2 interface between Node Bs providing each radio resource control functionality including mobility management to its terminal.

In a further variation, the pointer received from the neighboring radio resource control entity may be included to the control message sent to the mobile terminal in the source cell, if the neighboring cell is the target cell for a handover of the mobile terminal or if the neighboring cell is one of potential cells to which the mobile terminal attaches upon performing cell selection or cell reselection.

According to another embodiment of the invention the mobile terminal's change of connectivity or attachment from a source cell to a target cell is part of a hard-handover procedure, a cell selection procedure or a cell reselection procedure.

Further, in another embodiment, target cell-specific system information related to dynamically changing system information in the target cell is pointed to by the pointer in the control message, while target cell-specific system information related to non-dynamically changing system information is comprised within the control message.

In another embodiment of the invention, target cell-specific system information related to critical system information on the target cell is pointed to by the pointer in the control message, while target cell-specific system information related to non-critical system information is neither pointed to by the pointer of the control message nor comprised within the control message. For example, critical system information may be information necessary for performing a mobility procedure.

Moreover, critical system information that has to be acquired by the mobile terminal to perform a hard-handover procedure may be for example information on a common physical channels configuration in the target cell and/or information on a configuration of shared physical channels in the target cell.

In another example, critical system information that has to be acquired by the mobile terminal to perform a cell selection or cell reselection procedure is information on cell selection parameters for the target cell and/or information on the uplink interference in the target cell.

In one embodiment of the invention, the target-cell specific system information is periodically transmitted within the target cell.

In an embodiment of the invention, the control message sent to the mobile terminal through the source cell may for example be a radio resource control protocol message.

In another embodiment, the target cell-specific system information is system information transmitted on a broadcast control logical channel of the target cell.

Another embodiment of the invention provides a radio resource control apparatus for informing a mobile terminal served by the by the radio resource control apparatus on target cell-specific system information within a mobile communication system. the apparatus may comprise a communication unit for instructing the mobile terminal to change connectivity or point of attachment from the source cell served by the by the radio resource control apparatus to a target cell by sending a control message to the mobile terminal. As indicated above, the control message may comprise at least one pointer to target cell-specific system information within the target cell.

In a further embodiment, the communication unit may receive a respective pointer to neighboring cell-specific system information from at least one neighboring cell. Moreover, at least one pointer received from a neighboring cell may be included in the control message.

In one embodiment of the invention, the control message is a dedicated message sent to the mobile terminal.

In a further embodiment, the communication unit may transmit a pointer on system information specific to the cell controlled by the radio resource control apparatus to at least one neighboring radio resource control apparatus. Thereby, the pointer on system information specific to the cell controlled by the radio resource control apparatus may be for example sent in at least one application protocol or frame protocol message.

In another embodiment, the radio resource control apparatus may further comprise means or may be adapted to perform the method for informing a mobile terminal on target cell-specific system information according to one of the different embodiments described herein.

A further embodiment of the invention relates to a mobile terminal for use in a mobile communication system. The mobile terminal may for example comprise a communication unit (such as a receiver and a transmitter) for receiving a control message indicating to the mobile terminal to change connectivity or point of attachment from the source cell to a target cell, wherein the control message is received from a radio resource control apparatus of the source cell, and wherein the control message comprises at least one pointer to target cell-specific system information. Moreover, the mobile terminal nay be adapted to attach or connect to the target cell using the pointer to the target cell-specific system information comprised in the control message.

In another embodiment, the mobile terminal may further comprise means or may be adapted to perform and participate in the method for informing a mobile terminal on target cell-specific system information according to one of the different embodiments described herein.

Further, the invention according to another embodiment provides a communication system comprising a radio resource control apparatus a mobile terminal as described herein.

Moreover, another embodiment relates to a computer readable medium storing instructions that, when executed by a processor of a radio resource control apparatus, cause the radio resource control apparatus to inform a mobile terminal served by the by the radio resource control apparatus on target cell-specific system information within a mobile communication system. The radio resource control apparatus may be caused to inform a mobile terminal served by the by the radio resource control apparatus on target cell-specific system information by instructing the mobile terminal to change connectivity or point of attachment from the source cell served by the by the radio resource control apparatus to a target cell by sending a control message to the mobile terminal, wherein the control message comprises at least one pointer to target cell-specific system information within the target cell.

In a further embodiment, the computer readable medium stores instructions that, when executed by the processor of the radio resource control apparatus, cause the radio resource control apparatus to perform the steps of the method for informing a mobile terminal on target cell-specific system information according to one of the different embodiments described herein.

Another embodiment of the invention relates to a computer readable medium storing instructions that, when executed by a processor of a mobile terminal in a mobile communication system to receive a control message indicating to the mobile terminal to change connectivity or point of attachment from the source cell to a target cell, wherein the control message is received from a radio resource control apparatus of the source cell, and wherein the control message comprises at least one pointer to target cell-specific system information, and to attach or connect to the target cell using the pointer to the target cell-specific system information comprised in the control message.

The computer readable medium according to a further embodiment, further stores instructions that, when executed by the processor of the mobile terminal, cause the mobile terminal to perform and participate in the method for informing a mobile terminal on target cell-specific system information according to one of the different embodiments described herein.

### BRIEF DESCRIPTION OF THE FIGURES

In the following the invention is described in more detail in reference to the attached figures and drawings. Similar or corresponding details in the figures are marked with the same reference numerals.
- **Fig. 1**: shows the high-level architecture of UMTS according to UMTS R99/4/5,
- **Fig. 2**: shows an exemplary architecture of the UTRAN according to 3GPP LTE study project,
- **Fig. 3**: shows an overview of the radio interface protocol architecture of the UTRAN,
- **Fig. 4**: shows the structure of a Master Information Block (MIB),
- **Fig. 5**: shows exemplary deployment scenarios given the system bandwidth size of 15 MHz divided into three subbands of equal size and assuming terminal bandwidth capabilities equal to 5, 10 and 15 MHz,
- **Fig. 6**: shows the camping of a 10 MHz UE in a communication system having 20MHz system bandwidth, where the fixed rate broadcast channel is provided around the center frequency of the system,
- **Fig. 7**: show an exemplary hard handover procedure according to UMTS,
- **Fig. 8**: show an exemplary cell reselection procedure according to UMTS,
- **Fig. 9**: shows an exemplary structure of MIB and SIBs on a broadcast transport channel using the MIB structure of Fig. 4,
- **Fig. 10**: shows the concept of including a pointer to target cell-specific system information to a control message sent via the source cell according to an exemplary embodiment of the invention wherein system information is mapped to a fixed rate and variable rate transport channel,
- **Fig. 11**: shows the concept of including a pointer to target cell-specific system information to a control message sent via the source cell according to another exemplary embodiment of the invention wherein system information is mapped to,
- **Fig. 12**: shows an exemplary format of a MIB including a pointer indicating the mapping of system information blocks to a fixed rate and variable rate transport channel when Layer 1 outband signaling as shown in Fig. 11 according to an embodiment of the invention,
- **Fig. 13**: shows a concept of including a pointer to target cell-specific system information to a control message sent via the source cell according to another exemplary embodiment of the invention wherein system information is mapped to a fixed rate and variable rate transport channel and Layer 2 inband signaling is used,
- **Fig. 14**: shows an exemplary format of a MIB including a pointer indicating the mapping of system information blocks to a fixed rate and variable rate transport channel when Layer 2 inband signaling as shown in Fig. 13 according to an embodiment of the invention,
- **Fig. 15**: shows a concept of including a pointer to target cell-specific system information to a control message sent via the source cell according to another exemplary embodiment of the invention wherein a portion of the system information is simultaneously transmitted on different resource blocks,
- **Fig. 16**: shows a concept of including a pointer to target cell-specific system information to a control message sent via the source cell according to another exemplary embodiment of the invention wherein a portion of the system information is included in the control message,
- **Fig. 17**: shows a concept of including a pointer to target cell-specific system information to a control message and its repetition sent via the source cell according to another exemplary embodiment of the invention wherein a repetition period of the target cell-specific system information is indicated to the mobile terminal,
- **Fig. 18**: shows a concept of using an additional MAC PDU for transmitting an updated SFN and scheduling information with a repetition of the control message sent via the source cell according to another exemplary embodiment of the invention and
- **Fig. 19**: shows the maintenance of a neighboring cell list according to an exemplary embodiment, wherein the neighboring cell list comprises cells for which a respective pointer to cell-specific system information is to be included in a control message to the mobile terminal when performing a mobility procedure.

### DETAILED DESCRIPTION OF THE INVENTION

As outlined previously, one aspect of the invention is to suggest an improvement of existing hard handover or cell reselection procedures to minimize their delay. According to this aspect, it is suggested to include a pointer to a control message sent to a mobile terminal for instructing same to change its connectivity or its point of attachment from a source radio cell (controlled by a source base station) to a target radio cell (controlled by a target base station).

According to one embodiment of the invention, the control message is transmitted from the source base station to the mobile terminal through the source radio cell. It should be noted that in this embodiment it is assumed for exemplary purposes that the base station is in charge of managing the mobile terminals' mobility within their cells. More generally, it may be assumed that the control message is transmitted from a radio resource control entity handling mobility functions in the source cell and being terminated in source Node B. The control message may for example be a cell reselection command (for example a [E-RRC] CONNECTION RELEASE message) or a handover command message (for example a [E-RRC] HANDOVER INDICATION message).

The pointer included to the control message points the mobile terminal to target cell-specific system information in the target cell. For the cell reselection case there may be one or plural pointers included in the control message that point the mobile terminal to target cell-specific system information in a respective target cell out of potential target cells. These potential target cells are typically at least one of the radio cells neighboring the source cell. By pointing the mobile terminal to the target cell-specific system information in a (potential) target cell, the mobile terminal may be enabled to receive the cell-specific system information in the target cell upon attaching to the target cell, without requiring a prior reception of a pointer (or pointers) to the target cell-specific system information through the target cell.

The pointer may include a collection of control information in a modular way as present in the MIB of the target cell (e.g. position of a SIB on a transport channel used that is position in the time-frequency plane relative to the common timing reference, repetition period, timer value and value tag) being applicable to the at least a portion of the target cell-specific system information (e.g. at least one SIB). In addition to containing a subset of information transmitted in the target cell's MIB, a pointer may include a particular value of a common timing reference (e.g. the system frame number) from which the information contained in the pointer is valid.

In one embodiment the cell-specific system information in the target cell contains system information for establishing connectivity on the air interface of the target cell or information relevant for changing a point of attachment to the target cell. For example, this relevant system information may be information on the common physical channel configuration in the target cell and/or information on the configuration of variable rate or shared physical channels used for transmission of system information in the target cell. Optionally, the relevant system information may further comprise information on the on the uplink interference in the target cell.

Alternatively, relevant system information may also be information on the cell reselection parameters in the target cell and/or information on the interference in the target cell. In this alternative and optionally, the relevant system information may further comprise information on the common physical channel configuration in the target cell.

In a more specific example, the relevant system information may be the following information. Please note, that depending on whether a handover procedure or a cell reselection procedure is performed, different combinations of the information outlined below are considered relevant for establishing connectivity on the air interface of the target cell or information relevant for changing a point of attachment to the target cell. Each of the portions of the system information listed below may be comprised in individual system information blocks.

One important portion of the system information is cell selection parameters. These parameters that may be especially relevant for cell reselection may comprise cell identity, cell selection and reselection info (e.g. cell selection and reselection quality measure), access restriction info, etc. of the potential radio cells to which a mobile terminal may attach. Using the categorization as shown in Table 1 above, this information may be for example comprised in the system information block SIB3.

Another relevant portion of the system information for performing mobility procedures is the common physical channel configuration of a potential target cell. This information may be especially relevant in the handover case but may also be useful for the cell reselection case. The common physical channel configuration may for example comprise information on the paging channel configuration comprising, for a paging channel, allocation of resource blocks in time-frequency plane, modulation and coding scheme used and also configuration of RACH (Random Access Channel) channels in time frequency plane (e.g. assignment of access slots). Using the categorization as shown in Table 1 above, this information may be for example comprised in the system information block SIB5.

A further relevant portion of the system information may be information on the uplink interference of a cell, which may be for example of interest for cell reselection. This information may be relevant, as it may avoid additional delays due to back-off in random access procedure. The uplink interference information may comprise uplink interference information for each of the random access channels defined in the time-frequency plane. Using the categorization as shown in Table 1 above, this information may be for example comprised in the system information block SIB7.

Another relevant portion of the system information could be information on the configuration of shared physical channels in connected mode. Of particular relevance could be its information in uplink and downlink SCH (Shared CHannel) and its associated L1/L2 (Layer 1/Layer 2) control channel. The associated L1/L2 control channel typically may carry scheduling information for downlink data transmission, scheduling grant for uplink data transmission and ACK/NACK for uplink data transmission. More specifically, configuration of respective channels may comprise allocation of resource blocks in time-frequency plane, and modulation and coding scheme used. Using the categorization as shown in Table 1 above this information may be for example comprised in the system information block SIB17.

In one embodiment of the invention the individual types of system information may be categorized in system information blocks. Hence, if the pointed target cell-specific system information within a control message is communicated separately in individual system information blocks, the control message may for example include a pointer to each of the system information blocks or the pointer may comprise the information relevant for all system information blocks.

In another embodiment, the cell-specific system information is data of a broadcast control logical channel, such as for example the BCCH in a 3GPP-based system and is subject to broadcasting to all terminals within the respective cell. The target cell specific system information may thus be one or more system information blocks of the broadcast control logical channel of a target cell. In one embodiment of the invention, the system information blocks may be mapped to a single broadcast (transport) channel for transmission within the radio cells. In another embodiment, the system information blocks are mapped to plural transport channels, for example to a fixed rate transport channel and/or a variable rate transport channel. The fixed rate transport channel may also be denoted a fixed rate broadcast channel or primary broadcast channel, while variable rate transport channel may also be denoted a variable rate broadcast channel or secondary broadcast channel. In other words, the fixed rate transport channel may thus be also considered a 'fixed rate part' of a broadcast logical channel, while the variable rate transport channel may be also considered a 'variable rate part' of a broadcast logical channel.

As will be explained further down below in more detail, according to one embodiment of the invention, the individual system information blocks (or portions of the target cell-specific system information) may be mapped to either one of the fixed rate transport channel and the variable rate transport channel or to both of them. Further, in another embodiment one or more system information blocks (or portions of the target cell-specific system information) may be simultaneously transmitted on different radio resources of the target cell.

The mapping of system information blocks to a variable and/or fixed rate transport channel can be advantageous in that the acquisition of this information by mobile terminals in terms of terminal processing time and power consumption may be optimized. Other advantages that may be achieved is an improved reading time for broadcast system information of mobile terminals for all sizes of standalone spectrum allocations, greater flexibility of operators in configuring transport channels for broadcast and increased scheduling efficiency of system information, which may be a result from mapping system information to a variable rate transport channel.

Generally, a pointer in the control message may contain information on the scheduling of at least one system information block (or portion of the target cell-specific system information). In case a system information block (or a portion of the target cell-specific system information) is mapped to the variable rate transport channel, the pointer may for example indicate a transmission format (e.g. position in time-frequency plane i.e. exact Resource Blocks assigned, modulation and coding scheme used; DTX - discontinuous transmission is also possible) and timing of a respective system information block (or portion of the target cell-specific system information) on the variable rate transport channel. In case a system information block (or a portion of the target cell-specific system information) is mapped to the fixed rate transport channel, the pointer may specify the position of the respective system information block on the fixed rate transport channel (e.g. position in time-frequency plane i.e. exact Resource Blocks assigned) and optionally the timing based on which the respective system information block is transmitted relative to common timing reference under the target cell. Finally, in both cases the pointer may include the SFN (system frame number, common unit of the cell's timing reference) starting from which the information is valid. Furthermore, if a mapping of the system information blocks (or target cell-specific system information) to more than one transport channel is foreseen, a pointer may also include an indication of the transport channel to which a respective system information block (or a portion of the target cell-specific system information) is mapped.

It should be noted that transmission of relevant system information on variable rate part of a broadcast channel may enable more flexible implementation of scheduling of related system information blocks in the target cell. However, the invention is not limited to transmission of relevant system information on variable rate part of the broadcast channel (such as BCH) of the target cell only. Implementations of the invention, where only the fixed rate part of a broadcast channel is used may also be foreseen.

Furthermore, transmission on variable rate transport channels may also be denoted 'variable rate transmissions' or 'flexible rate transmissions' (accordingly the variable rate transport channel could also be denoted as a flexible rate transport channel).

According to one exemplary embodiment related to implementing the invention in a 3GPP based communication system, variable rate transmissions of system information may be realized by transmission on DL-SCH Transport Channel or a BCH Transport Channel having variable transport format. Similarly, 'fixed rate transmissions' could for example be realized by transmission on a BCH Transport Channel having a fixed transport format for system information.

Another aspect of the invention relates to the communication of the pointers to cell-specific system information between radio resource control entities within the communication system. This may for example advantageous in cases where no static configuration for the transmission of the system information in the cells (known to respective neighboring radio resource control entities) is used. According to this aspect, base stations, typically of neighboring cells, may inform each other on the pointer (e.g. the scheduling information and/or mapping of relevant system information) pointing cell-specific system information in the cell of the reporting entity. The signaling of the information (pointer or pointers) may for example be based on a request-response mechanism or may be initiated by a radio resource control entity - e.g. in response to a change in the mapping of system information or a change of the transmission format and/or timing of the system information. As there may be several mobility procedures defined in the system, such as handover or cell reselection, the radio resource control entity may signal a respective pointer to system information relevant for a respective mobility procedure (of course if the same system information is relevant for several mobility procedures only one pointer may be signaled). In an exemplary embodiment of the invention relating to the implementation of this aspect in a 3GPP based communication network, a source Node B may be informed of scheduling of SIBs relevant to one or more mobility procedures from one or more of its neighboring Node Bs. As indicated above, the scheduling of the SIBs may use a static transport format and/or a static mapping to transport channel may be used. This may be for example, configured as a part of overall operation and maintenance (O&M). Alternatively, the scheduling and/or the mapping may be also dynamic and may be exchanged by signaled via the X2 interface (see Fig. 2) among the Node Bs by means of frame or application protocol. Finally, in case of a hard handover procedure, desired information may for example be embedded in a handover response message transmitted from source to target Node B.

Before elaborating on the concepts of the invention according to different exemplary embodiments in further detail below, the structure of the system information (e.g. transmitted on the broadcast control channel (BCCH) - a logical channel ) according to one exemplary embodiment of the invention is outlined in further detail with reference to Fig. 4. The structure of the information may be tree-like. A so-called master information block (MIB) forms the root of the tree structure, whereas the so-called system information blocks (SIBs) represent its branches. The MIB information may be transmitted less frequently than the SIBs carrying the broadcast system information. The information in the MIB may also not need to be read by the individual terminals each time the MIB information is transmitted. For exemplary purposes it may be assumed that the system information is mapped to a single broadcast transport channel in this embodiment.

One part of MIB may for example be reserved for information on each system information block. The control information associated to a respective SIB and comprised in the reserved parts may have the following structure. Each control information associated to a SIB and being included of the MIB's pointer may indicates the position of the respective SIB on the broadcast transport channel (or fixed or variable rate transport channel) on which it is transmitted relative to common timing reference. Further, a repetition period of SIB may be indicated. This repetition period indicates the periodicity at which the respective SIB is transmitted. The control information may further include a timer value for timer-based update mechanism or, alternatively, a value tag for tag-based update mechanism of the SIB information.

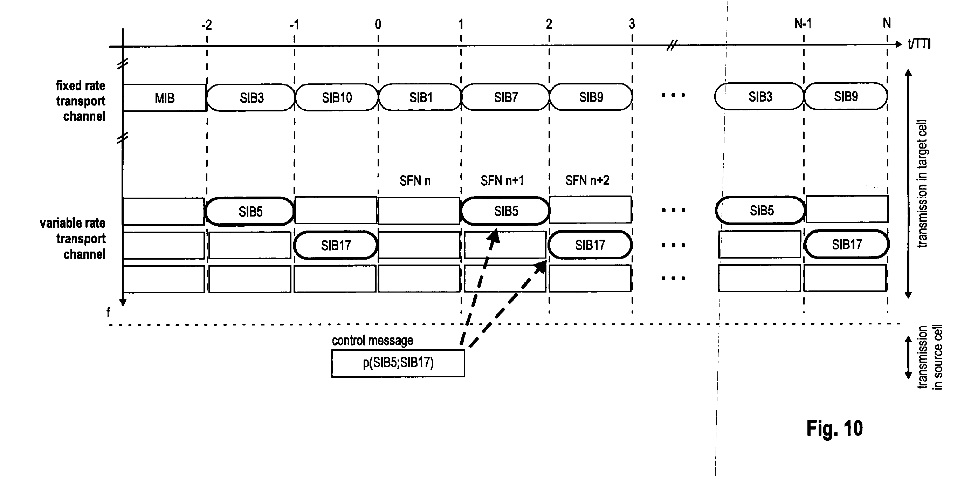

Using this exemplary structure of the MIB and logical-to-transport channel mapping of the SiBs in the target cell an exemplary broadcast transport channel structure could look like shown in Fig. 9. Upon the mobile terminal performing a mobility procedure to attach or connect to the target cell having this channel structure, the control message informing the mobile terminal to attach/connect to this target cell may comprise a pointer with control information indicating the transport format and relative timing of relevant system information for the mobility procedure. For example, if the relevant system information would be included in SIB5 and SIB17 for a handover procedure, the pointer of the control message may point the mobile terminal to these SIBs in the target cell, so that the mobile terminal may receive these SIBs upon attachment to the target cell without receiving the MIB first (e.g. when the mobile terminal attaches to the target cell in response to the control message after the MIB has in been broadcast in the target cell).

Next, another exemplary embodiment of the invention is described, where the system information is mapped to one of or both of a fixed rate and/or variable rate transport channel. Fig. 10 shows the concept of including a pointer to target cell-specific system information to a control message sent via the source cell according to an exemplary embodiment of the invention wherein system information is mapped to a fixed rate and variable rate transport channel. For exemplary purposes it may be assumed in this embodiment that the categorization of the broadcast system information in system information blocks (SIBs) as suggested in Table 1 is used. The contents of Table 1 above should be only considered as one possible example of the contents and classification of the broadcast system information. Also the classification of the frequency at which the different portions of the system information is broadcast and its classification into the different SIBs is intended to serve only for exemplary purposes and is not intended to limit the invention to this example. It is recognized that in the ongoing development and improvement of existing mobile communication systems, the content, format, periodicity of transmission, etc. may change.

Further, it may also be assumed for exemplary purposes only that the system information are mapped to a fixed rate transport channel and/or a variable rate transport channel within the target cell. On the fixed rate transport channel a MIB is periodically transmitted that may include a control information identifying the mapping of the SIBs to the fixed rate transport channel and/or a variable rate transport channel and their transmission format and/or timing (if not static or preconfigured). For exemplary purposes the variable rate transport channel may be assumed to use as predetermined bandwidth of the overall system bandwidth in the frequency domain. This channel bandwidth may be separated in plural subbands or subcarriers in the frequency domain as exemplified in Fig. 10. In the time domain, the air interface resources of the variable rate transport channel may be divided in individual sub-frames. Each sub-frame may be assigned a system frame number (SFN) indicating a sub-frame's relative position in the time domain.

A subband or subcarrier in the time domain and a sub-frame in the time domain form a resource block which may be the smallest unit of air interface resources that can be allocated to a user. Of course the definition of a resource block is flexible, e.g. a resource block may also span one or more subbands/subcarriers in the frequency domain and/or one or more sub-frames in the time domain. Furthermore, it may be assumed for exemplary purposes that the length of a transmission time interval (TTI) is equivalent to the length of a sub-frame in the time domain - of course a TTI may alternatively span multiple sub-frames.

As explained previously, in a conventional system, the mobile terminal attaching to a new radio cell (target cell) would need to receive the MIB on the fixed rate transport channel first, so as to derive therefrom the mapping and transport format and/or timing of the SIBs within the target cell. Only with this control information, the mobile terminal is able to receive the SIBs including also those SIBs relevant for performing mobility procedures such as handover or cell reselection.

If the control message indicating to attach/connect to the target cell is received at a time instance (e.g 0) after the MIB having been sent in the target cell, the mobile terminal would need to wait for the next MIB before being able to receive SIBs relevant for performing the mobility procedure. According to this embodiment of the invention, the control message comprises a pointer to the SIBs relevant for performing the mobility procedure - which are SIBS and SIB17 in this example. Though the MIB has been missed in the target cell, the pointer of the control message informs the mobile terminal on the mapping, timing and transport format of SIB5 and SIB7 in the target cell, so that upon attachment to the target cell the mobile terminal can receive these SIBs and may continue the mobility procedure without having to receive the next MIB in the target cell.

Next, two exemplary mobility procedures, a hard handover procedure and a cell reselection procedure according to exemplary embodiments of the invention will be described with reference to Fig. 7 and Fig. 8.

Fig. 7 shows a hard handover procedure as explained previously. The improvements of the hard handover procedure according to one embodiment of the invention will be described in the following. For exemplary purposes, it is assumed that Node Bs act as radio resource control entities in the respective cells. First, a UE is connected to a Node B in the current radio cell (source cell) and exchanges user plane data with the source Node B. In a 3GPP based system, is in active state when receiving user plane data. The UE may for example periodically provide channel quality measurements to the source Node B, which are evaluated by the source Node B to decide whether or not the UE needs to be handed over to another cell (target cell). When deciding by the source Node B to hand the UE over to the target Node B, the source Node B sends a handover request to the target Node B which may perform admission control for the UE in response to the request. This request may for example comprise a context transfer of UE-related services and system information to allow the target Node B to configure resources accordingly. If the UE is admitted to connect to the target Node B, the target Node B responds with a handover response, indicating to the source Node B that the target Node B is prepared for the UE to connect to the target cell. In this exemplary embodiment, the handover response message sent by the target Node B could comprise target-cell specific system information and/or a pointer to target-cell specific system information in the target cell relevant for the UE to perform the handover-procedure.

Moreover, e.g. in case source and target cell are not synchronized, the handover response sent by the target Node B may also comprise synchronization information that can be provided to the UE in the handover indication. This synchronization information may for example be the system frame number (SFN) in the target cell started from which the information contained in the pointer to be included in dedicated message is valid. Thus, after SFN acquisition from broadcast channel of the target cell, a UE may know whether information contained in the pointer of the source cell is applicable or not.

In response to receiving the handover response message from the target Node B, the source Node B sends a handover indication to the UE. This handover indication is a dedicated control message commanding the UE to tear down the user plane in the source cell and to establish the user plane in the target cell (i.e. to enter active state in the target cell). In 3GPP based systems the UE will stay in active state during the handover procedure. To speed up the establishment of the user plane in the target cell, the handover indication may comprise a pointer pointing the UE to target-cell specific system information that is relevant for (attaching to the target cell) and for establishing the user plane in target cell.

Using the exemplary categorization suggested in Table 1, this relevant information on the target cell may for example be SIB5, SIB7 and SIB 17. Due to having received the pointer to this relevant system information the UE may acquire SIB5, SIB7 and SIB 17 of the broadcast control logical channel of the target cell when attaching to the target cell. As indicated previously, the UE does not have to acquire the MIB first so as to be able to receive SIB5, SIB7 and SIB17 in the target cell. Having acquired the relevant system information the UE may activate the user plane with the handover complete message sent to the target Node B and may start exchanging user plane data.

Fig. 8 shows a cell reselection procedure. As for the hard-handover case the improvements of this procedure according to an exemplary embodiment of the invention will be described next. It is assumed for exemplary purposes that Node Bs act as radio resource control entities in the respective cells. Generally, a cell reselection procedure is performed by UEs in idle mode. In the example shown in Fig. 8, it is assumed for exemplary purposes that the UE is in active mode first and transmits/receives user plane data in the source cell. Moreover, the UE may provide the source Node B with traffic volume measurements that allow the source Node B that are evaluated at the source Node B for deciding whether the connection to the UE should be maintained or not. If not - and instead of performing a handover - the source Node B may release the connection to the UE by a connection release message so that the UE enters idle mode. With this message the source Node B so-to-say assigns control of the UE's mobility to the UE. In one exemplary embodiment of the invention the connection release message comprises potential target-cell specific system information and/or pointers to potential target-cell specific system information in the potential target cell relevant for the UE to perform a cell reselection. Typically, the potential target cells will be the cells neighboring the source cell.

Upon receiving the connection release the UE performs a cell reselection to select a radio cell to connect to. As relevant system information and/or a pointer to the relevant system information of the selected target cell are known to the UE, the UE may start reading the system information in the target cell upon attachment. Further, assuming that the UE (in idle mode) is paged in the target cell or (as shown in Fig. 8) decides to go into active state, i.e. to establish a user plane connection, the UE and the target Node B establish a user plane connection by exchanging connection request, connection setup and connection complete messages.

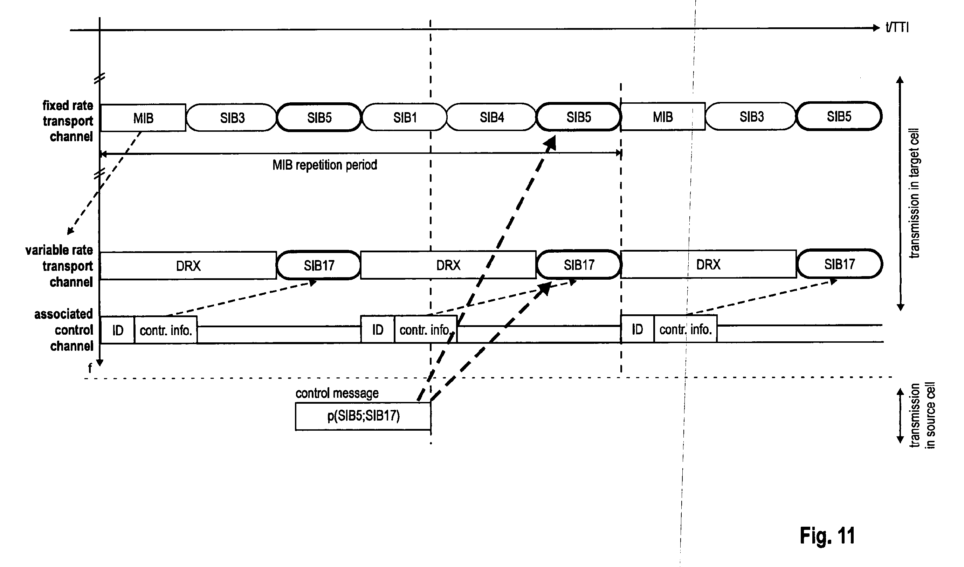

Fig. 11 shows the concept of including a pointer to target cell-specific system information to a control message sent via the source cell according to another exemplary embodiment of the invention wherein system information is mapped to a fixed rate and variable rate transport channel and Layer 1 outband identification is used.

In Fig. 11, system information and related control signaling within the target cell is mapped to three different channels, a fixed rate transport channel, a variable rate transport channel and a physical control channel associated to the variable rate transport channel, is shown. The control channel is associated to the variable rate transport channel in that it contains control information describing transmission format and timing of the system information on the variable rate transport channel.

Further, the mobile terminal (or, equivalently, logical to transport channel mapping) to receive the system information in the target cell upon performing a mobility procedure and attaching to the target cell may be designated by respective Layer 1 outband identification. Accordingly, the logical-to-transport channel mapping is indicated on the associated physical control channel (e.g. SCSCH).

In the target cell, the system information e.g. provided on the broadcast control logical channel (e.g. the BCCH in UMTS), is mapped to the variable rate transport channel and the fixed rate transport channel of Fig. 11.

The Master Information Block (MIB) is transmitted periodically (MIB repetition period) on the fixed rate transport channel. For example, the MIB may be transmitted after a predetermined time span, such as a given number of transmission time intervals (TTIs). Further, assuming a similar channel structure for the fixed rate and variable rate channel as in Fig. 10, a sub-frame may comprise one or more System Information Blocks (SIBs). A SIB comprises a portion of the system broadcast information to be transmitted. For example, each SIB may comprise a predetermined or configurable set of information of a certain category as exemplified in the Table 1.

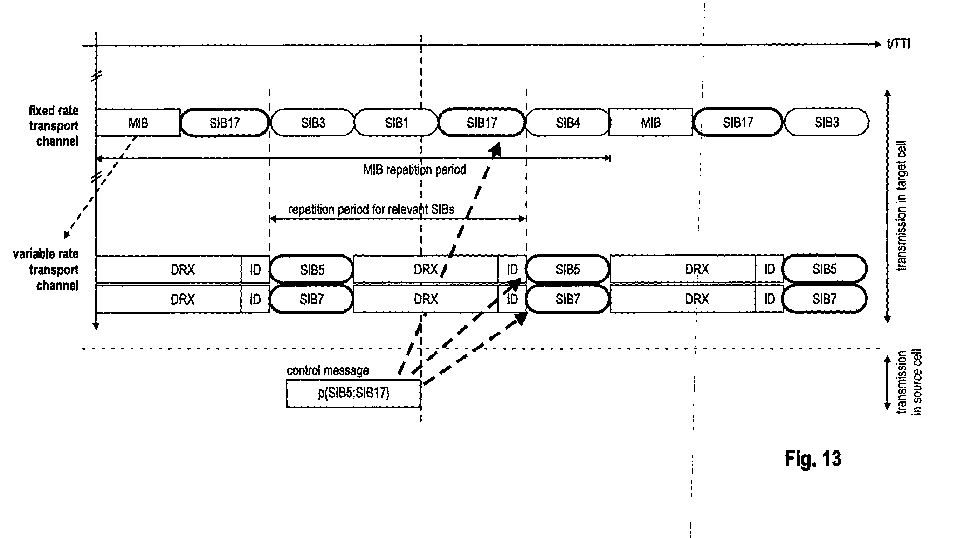

The MIB used in the exemplary embodiment shown in Fig. 11 is illustrated in Fig. 12 in further detail. Fig. 12 shows an exemplary format of a MIB including a pointer indicating the mapping of system information blocks to a fixed rate and variable rate transport channel when Layer 1 outband signaling as shown in Fig. 11 according to an embodiment of the invention. This pointer of the MIB may also be included in the control message sent to the mobile terminal in the source cell to point to system information in the target cell. For the Layer 1 outband signaling case it may be assumed that the mobile terminal reads associated physical control channel in the target cell containing scheduling information on the variable rate transport channel in the target cell. Hence the pointer may also contain information on the configuration of associated physical control channel in the target cell. The structure of system broadcast information according to this embodiment of the invention is also tree-like, as has been outlined above. The MIB comprises different partitions of control information each of these partitions being associated to a respective SIB. Similarly, if pointing to individual SIBs such as SIB5 in the target cell by the control message sent to the mobile terminal through the source cell, the structure and content of the control information may be similar to same used within the MIB of the target cell.

For those SIBs that are mapped for transmission to the fixed rate transport channel in the target cell, the control information in the pointer in the MIB or control message may have the following structure. Each control information associated to a SIB (pointer to SIB #n) indicates the position of the SIB on the fixed rate transport channel on which it is transmitted relative to common timing reference. For each cell it is assumed for exemplary purposes that a common timing reference is given by SFN. SFN numbering between neighboring cells may vary and therefore target cell's SFN is transmitted in the control message so as to acquire information on the SFN from which the scheduling information is valid. Further, a repetition period of SIB indicating the periodicity at which the respective SIB is transmitted may be indicated in the pointer of the MIB or the control message.

The pointer's control information for system information mapped to the variable rate transport channel may have a different structure than the control information for the system information mapped to the fixed transport channel. According to an exemplary embodiment, the control information for SIB17 in the MIB's pointer or the control message's pointer comprises an indication of the variable rate transport channel on which SIB17 is transmitted. This indication is illustrated by the dashed arrow pointing from the MIB to the variable rate transport channel in Fig. 11.

As indicated above, Layer 1 outband identification is used for indicating the logical channel-to-transport channel mapping to the receiving mobile terminals. For this purpose and identification of the mapping is transmitted on the associated control channel (see "ID"). This identification may for example use default or configured identifiers of the logical channel to which a respective transport channel is to be mapped on the receiving side. These identifiers may be transmitted by in the MIB. The identifiers used may be default values or may be configured by the system.

The control channel associated to the variable rate transport channel comprises control information, which indicates the scheduling of the SIB on the variable rate transport channel. This control channel may also be indicated by the pointer included in the control message. The control information may at least indicate temporal position of the SIB(s) mapped to the shared channel on that channel for a respective SIB. In another embodiment of the invention the control information on the associated control channel is scheduling information and may comprise information on chunk allocation, data modulation and transport block size.

Returning to the transmission of broadcast system information in UMTS systems for exemplary purposes only, Layer 1 outband identification and transmission of scheduling information are specific for a variable rate transport channel while scheduling information of system information blocks conveyed via fixed rate transport channel is transmitted within the Master Information Block of the fixed rate transport channel, that is within Layer 2 transport blocks. The configuration of the fixed rate transport channel may be for example semi-static, while the configuration of the shared downlink transport channel may be semi-static or dynamic. The flexibility of dynamic configuration of the variable rate transport channel in this embodiment of the invention may be advantageous from radio resource utilization perspective since fast scheduling of broadcast system information could be efficiently supported.

In an exemplary embodiment of the invention, the variable rate transport channel may be the Shared Downlink CHannel (SDCH) of a UMTS system, while the fixed rate transport channel may be the Broadcast CHannel (BCH); the control channel associated to the SDCH may be the Shared Control Signaling Channel (SCSCH).

Fig. 13 shows the concept of including a pointer to target cell-specific system information to a control message sent via the source cell according to another exemplary embodiment of the invention wherein system information is mapped to a fixed rate and variable rate transport channel and Layer 2 inband identification is used.

In the exemplary embodiment illustrated in Fig. 13, a variable rate transport channel is used without the need of an associated (physical) control channel for identification. As in the embodiment of the invention described with respect to Fig. 11 and 12, also in the embodiment shown in Fig. 13 system information is mapped to a fixed rate transport channel and a variable rate transport channel. The identifier ("ID") indicating the logical channel-to-transport channel mapping and semi-static configuration information (timing and transmission format) of the shared channel (e.g. SDCH) and configuration of associated physical control channel (e.g. SCSCH) are transmitted inband. This means that both pieces of information are transmitted at Layer 2. For example, the identification ("ID") may be provided within the header of Layer 2 packets of the variable rate transport channel, while the configuration information of variable rate transport channel may be provided within MIB. Similarly, the pointer of the control message when pointing to a SIB on the variable rate channel may comprise configuration information of variable rate transport channel as provided in the MIB of the target cell.

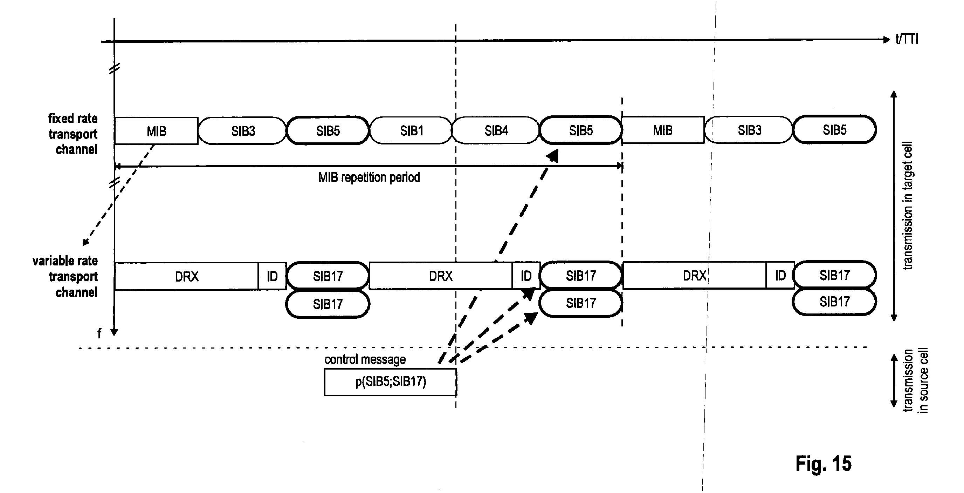

The identifier ID may be a default identifier or may be configured/assigned through MIB of the fixed rate transport channel, as described above. Fig. 14 shows an exemplary format of a Master Information Block used in the mapping of system information blocks in Fig. 13. More specifically, Fig. 14 shows an exemplary format of a MIB including a pointer indicating the mapping of system information blocks to a fixed rate and variable rate transport channel when Layer 2 inband signaling is used to transmit scheduling information on flexible broadcast channel as shown in Fig. 13 according to an embodiment of the invention. This pointer of the MIB may also be included in the control message sent to the mobile terminal in the source cell to point to system information in the target cell. The structure of the control information for SIBs mapped to the fixed rate transport channel is similar to that in the MIB shown in Fig. 12. The MIB control information of the SIBs mapped to the variable rate transport channel may in addition comprise an indication of the variable rate transport channel to which they have been mapped respectively. Similarly, the pointer of the control message would also comprise an indication of the mapping of the relevant SIB(s) in the target cell.

According to one exemplary embodiment, the system information may be categorized as proposed in Table 1 in the Technological Background section. Further, also a tree-like structure of the broadcast system information using a MIB and SIBs as explained in the Technological Background section is assumed for exemplary purposes.

Considering for exemplary purposes an LTE UMTS system and a hard handover case, the control message may be [E-RRC] HANDOVER INDICATION message sent from the Node B controlling the source cell (source Node B) to a UE. Accordingly, the source Node B may include the following information to the [E-RRC] HANDOVER INDICATION message:
- The System Frame Number (SFN) of the target Node B starting from which respective scheduling information is valid, and
- parts of the MIB (e.g. the before mentioned 'pointer') containing scheduling information for SIB5 and SIB17 (and optionally SIB7) valid for the radio cell controlled by the target eNode B.

It should be noted that in this example the information of SIBS and SIB17 may be considered relevant for the establishment of a radio connection to the target cell.

Considering for exemplary purposes an LTE UMTS system and a cell reselection case, the [E-RRC] RRC CONNECTION RELEASE message (an example for a control message) may contain the following information:
- SFN of each eNode B controlling candidate target cell(s) starting from which respective pieces of scheduling information is valid, and
- parts of MIB (e.g. the before mentioned 'pointer') containing scheduling information for SIB3 and SIB7 (and optionally SIB5) valid for each of eNode Bs from a candidate target cell list.

In this example related to the cell reselection procedure the information of SIB3 and SIB7 may be considered relevant for attaching the UE to the target cell.

With inclusion of pointer in each of the two above mentioned dedicated control messages (here RRC layer control messages), the signaling load for communicating the relevant SIB information to the UE prior to handover or cell reselection may be reduced to approximately 100 bytes per message in comparison to including the relevant SIB information into the dedicated RRC messages, where the resulting dedicated RRC message could easily exceed the size of 1 kByte.

Another embodiment of the invention relates to increasing the reliability of the transmission of relevant or critical SIBs mapped to the variable rate transport channel within the target cell. Fig. 15 shows an exemplary mapping of system information to a fixed rate and variable rate channel in a target cell according to another embodiment of the invention. Assuming that link adaptation techniques (such as adaptive modulation and coding (AMC) and/or power control) are used for transmitting data on the variable rate channel, the reliability of data transmission may depend on the geometry of mobile terminal receiving the data. For example, if the mobile terminal is located close to the cell boundary or moves fast within a cell, it may experience poor channel quality (i.e. is in a low geometry) so that the overall frame error rate may increase. In this scenario it may be likely that a mobile terminal may not successfully decode relevant (or critical) system information (such as SIB7 and SIB17 for the handover case) so that the interruption time of the mobility procedure is increased due to the mobile terminal needing to await the next transmission of the relevant (or critical) system information on the variable rate transport channel after the repetition period Tᵣₑₚ.

To circumvent this problem it may be foreseen to transmit relevant (or critical) SIBs mapped to the variable rate channel on more than one resource block (for example the same SIB may be transmitted in two or more resource blocks within a subframe) at a given time instance (subframe or TTI). For example, in Fig. 15 SIB17 is mapped to the variable rate transport channel and is sent on two resource blocks at a given time instance. Similarly, it may also be foreseen to repeat relevant system information to consecutive subframes of the variable rate transport channel. Accordingly, the pointer in the control message that is pointing to the relevant system information in the target cell may indicate the different resource blocks in which a relevant SIB is repeated/transmitted.

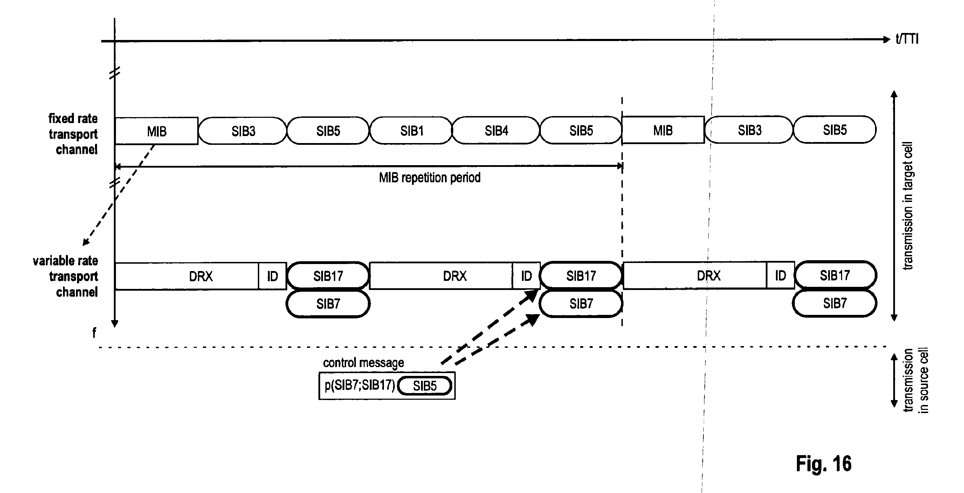

In another embodiment it may also be foreseen to include a portion of the target-cell specific system information (e.g. individual SIBs) into the control message sent to the mobile terminal to trigger the change of point of attachment to the target cell or the change of connectivity to the target cell. Fig. 16 shows the configuration of a control message according to an exemplary embodiment of the invention comprising a portion of the target-cell specific system information within the control message and pointing to the other portion of the target-cell specific system information by means of a pointer. In the example shown in Fig. 16, the system information of SIB5 of the target cell is comprised within the control message while the pointer in the control message points to SIB7 and SIB17 in the target cell that are mapped (for example) to the variable rate transport channel.

According to another exemplary embodiment, there may be not sufficient resources in the source cell for transmission of relevant SIBs within a dedicated control message indicating the receiving mobile terminal to change its point of attachment to a target cell or to connect to the target cell. In this case, the relevant SIBs may be further categorized into dynamic SIBs (with contents being often changed) and non-dynamic SIBs (with contents not being often changed). Also in this exemplary embodiment of the invention the transmission of individual relevant SIBs (i.e. portions of the system information) of the target cell within the control message may be foreseen. In this embodiment, non-dynamic SIBs of the target cell may be transmitted comprised in the control message without loss of system information. Dynamic SIBs of the target cell may be pointed to by the pointer in the control message or may be include in the control message. Accordingly, as has been indicated above, the resource control entities of neighboring cells should exchange relevant system information by either signaling the relevant SIBs to the neighboring radio resource control entities or by providing the neighboring radio resource control entities with a pointer to the relevant SIBs within their cell. Being aware of the relevant system information and/or their location and mapping in the target cell, the source radio resource control entities may provide a mobile terminal performing a cell reselection or to perform a handover to a neighboring cell (target cell) with a pointer to the relevant system information in the target cell or directly with (portions of) the relevant system information if same is included in the cell connection release command or handover indication.

Assuming for exemplary purposes a categorization of SIBs as provided in Table 1 and assuming the mobile terminal to perform a hard handover procedure, the dynamic SIBs of the target cell may be SIB7 and SIB17 while a non-dynamic SIB is SIB 5. For a cell (re)selection procedure, a dynamic SIB may be SIB7 and non-dynamic SIBs may be SIB3 and SIB5.

To generically classify information according to temporal variability (i.e. dynamic or not-dynamic), rates f1 and f2 (f1 <f2) describing frequency of change of this information may be considered. For example, an information (SIB) may be classified to be of low temporal variability and thus non-dynamic, if its rate of change f relates to f1 as f<=f1. Analogously, information may be of high temporal variability or dynamic, if its rate of change f relates to f1 as f>f1.

For a large group of mobile terminals, it may be desirable to further reduce signaling load. Another embodiment of the invention proposes to further reduce the signaling load in the source cell by defining critical SIBs (these are SIBs which have to be acquired by a terminal in order to perform mobility procedure) and non-critical SIBs (these are SIBs which do not have to be acquired by a terminal in order to perform mobility procedure) for a mobility procedure. It should be noted, that a SIB may be considered relevant for establishing connectivity on the air interface of the target cell or information relevant for changing a point of attachment to the target cell, however it may not be critical for establishing connectivity on the air interface of the target cell or information relevant for changing a point of attachment to the target cell.

For example, assuming again for exemplary purposes the categorization of system information as provided in Table 1, and considering a hard handover procedure, critical SIBs may be SIB5 and SIB17, or more generally, portions of the system information of the target cell that contain information on the configuration of common physical channels and to shared physical channels in connected mode. This information may be required to establish a connection to the target cell, i.e. to enter active mode in the target cell again to begin user plane data transfer. A relevant SIB which may however be non-critical for a hard handover the is uplink interference (i.e. SIB7 in Table 1), if the target Node B controlling the target cell sends timing adjustment to source Node B in the handover response message (compare Fig. 7).

Critical system information or SIBs may for example be defined a part of the system information or SIBs which have to be acquired by a mobile terminal in order to perform a mobility procedure. According to one embodiment, critical system information or SIB(s) may thus be pointed to by the control message and/or may be comprised in the control message. In contrast to critical system information/SIBs, non-critical system information may refer to parts of the system information or SIBs which do not have to be acquired by a terminal in order to perform mobility procedure.

For a hard handover procedure, a non-critical SIB may be system information on the uplink interference (e.g. SIB7), if the target Node B sends a timing adjustment to serving Node B in handover response message. Critical SIBs may for example be system information on the common physical channels configuration (e.g. SIB5) and system information on the configuration of shared physical channels in connected mode (e.g. SIB17)

After hard handover, non-synchronized random access may be used by a Node B to estimate, and, if needed, adjust the UE transmission timing to within a fraction of the cyclic prefix. As outlined in 3GPP RAN LTE ad hoc Tdoc R2-062016, "UL Timing Acquisition in LTE HO", available at http://www.3pgg.org and incorporated herein by reference, in the source cell, the mobile terminal may obtain the uplink timing adjustment information Δ1 by the uplink synchronization code. The target Node B may also receive the same uplink sync code and estimation the timing adjustment information Δ2 aligned to its own timing. The target Node B may feedback Δ2 to the source Node B, for example in the handover response message send from target Node B to source Node B. Therefore, for the initial non-synchronized random access after completion of Hard Handover procedure, a UE may not need to acquire SIB7 information so that same may not be classified "critical".

Similar to the hard handover case, also for cell (re)selection procedure, critical SIBs and non-critical SIBs may be defined. In one example, the critical SIBs for a cell reselection may be SIB3 and SIB7, while SIB5 may be considered non-critical for a mobile terminal-originated service.

It should be noted that a combination of transmission of relevant SIBs on fixed and variable rate part of broadcast channel may also be possible depending on the timing for reception of dedicated message.

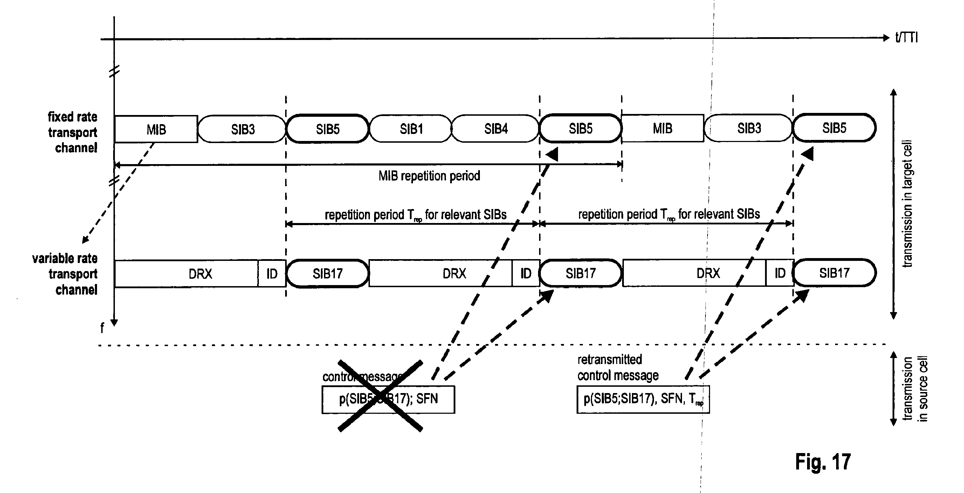

Further, other embodiments of the invention consider the case where the control message sent to the mobile node to command the mobile terminal to change its point of attachment or to connect to the target cell is lost or can not be successfully decoded by the mobile terminal. If dedicated signaling message is lost, the control message may be retransmitted. To ensure validity of the control message information on the target cell specific system information, the SIBs indicated in the control message (i.e. the relevant system information) may be repeated periodically in the target cell. Fig. 17 illustrates the above described scenario. It may be assumed for exemplary purposes that a part of the relevant system information (e.g. SIB17 for the handover case) is mapped to the flexible rate part of BCCH of the target cell and is transmitted periodically (repetition period Tᵣₑₚ).

If the control message needs to be retransmitted, the system frame number indicated in the control message is likely to have changed in the meantime, which could cause problems with acquiring the relevant system information in the target cell. Accordingly, it may be foreseen to indicate the retransmission period (Tᵣₑₚ) to the mobile terminal. Based on signaled retransmission period, the mobile terminal may then determine the correct SFN based on the repetition period and the (outdated) SFN of the control message and may read the relevant system information from the flexible part of the BCCH upon their repetition. The repetition period of (individual portions) of the target-cell specific system information may for example be signaled to the mobile terminal in a measurement configuration message, a handover Indication message, or a RRC connection release message by the radio resource control entity in the source cell. The implementation of the invention according to this exemplary embodiment may be advantageous for practically fixed implementations of scheduled SIBs on the variable rate part of BCCH.

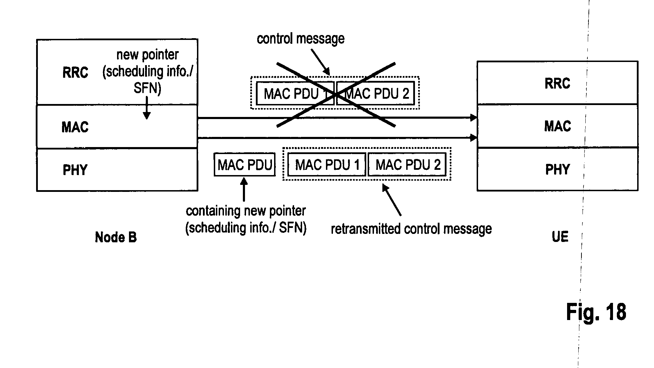

In another embodiment, an additional MAC PDU carrying an updated system frame number and/or new scheduling information on the relevant system information in the target cell may be transmitted together with MAC PDU(s) carrying the retransmitted control message (compare Fig. 18). In this case implementation of SIB transmission on variable rate part of the broadcast channel in the target cell is not restricted but may in turn require a more complex MAC implementation, in the Node B as RRC/MAC interaction (additional primitive containing new pointer between RRC and MAC) may be necessary.

It may be assumed that the new scheduling information and SFN designating validity of this information for the target Node B is provided by the target Node B in a frame protocol / application protocol message on an interface (such a X2 interface - see Fig. 2) between source and target Node B. The frame protocol/application protocol message may then be subject to protocol conversion to make its information available to RRC in the target Node B. The target Node B's RRC layer may provide the new scheduling information and SFN to MAC layer in a primitive so that the information may be included in a separate PDU

The frame protocol or application protocol message containing new scheduling information and SFN may be sent in response to a message from source Node B informing the target Node B on a failure in transmitting the control message to the UE in the source cell. As indicated above, this specific implementation may allow for a more flexible implementation for scheduling system information on the variable rate transport channel in the target cell, as the target Node B may adjust transmission format after failure of initial transmission of the control message to the UE in the source cell, which may for example useful to account for current availability of resources on variable rate transport channel.

In case of cell reselection, there may be several neighboring radio cells being potential candidates for being selected by the UE. Therefore the overall size of the connection release message may be too large, if a pointer to cell-specific system information for all neighboring cells being potential target cells is included therein. In one exemplary embodiment of the invention the size of information on the potential target cells for cell reselection within the control message indicating the mobile terminal to change its point of attachment may be decreased according to one of the following events triggered in the network based on measurement reports:
- A new cell enters predefined reporting range (i.e. measurement report indicates a channel quality above a threshold level). Add the cell to the cell list for reporting to mobile terminal.
- A cell in the list leaves reporting range (i.e. measurement report indicates a channel quality above equal or below a threshold level). Remove the cell from the cell list.

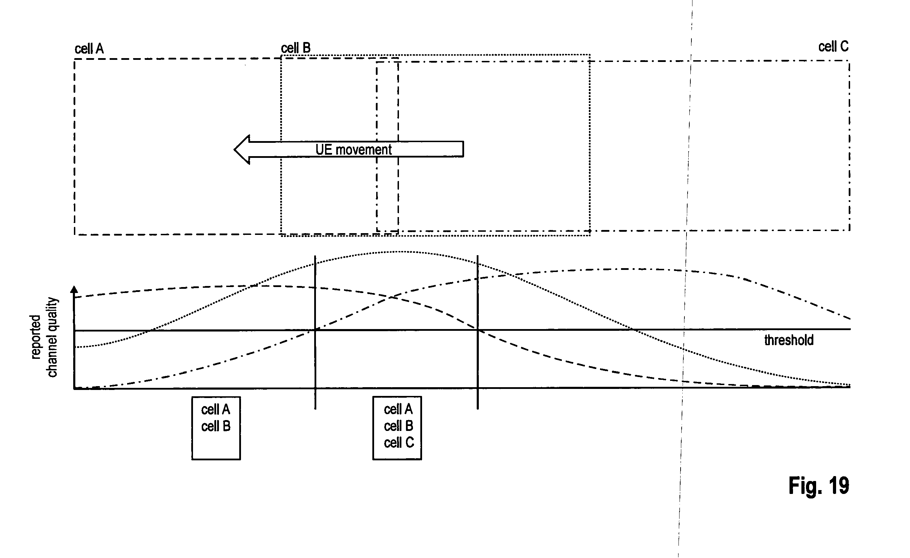

As illustrated for exemplary purposes in Fig. 19, a mobile terminal may move along the movement direction thereby experiencing and reporting different channel qualities for neighboring cells A through C. The initial neighboring cell list maintained by the Node B currently serving the mobile terminal may thus first contain cell A, cell B and cell C while finally, when having moved towards cell C, the neighboring cell list may only cell B and cell C. Accordingly, depending on the mobile terminals location upon deciding to send the connection release message to the mobile terminal, the connection release message from the currently serving Node B (source Node B) may include a pointer to relevant system information in cells A through C or B and C, respectively.

Further, as already briefly mentioned above it is to be noted that the concepts of the invention outlined in various exemplary embodiments herein may be advantageously used in a mobile communication system as described in the Technological background section that may for example have an architecture as exemplified in Fig. 1 or Fig. 2. In this exemplary network architecture, a fixed rate transport channel (e.g. broadcast transport channel) and/or a variable rate transport channel (e.g. shared transport channel) may be used for communication on uplink and/or downlink on the air interface between mobile stations (UEs) and base stations (Node Bs). For communication in the mobile communication system e.g. an OFDM scheme, a MC-CDMA scheme or an OFDM scheme with pulse shaping (OFDM/OQAM) may be used. In some embodiments the scheduler may schedule the resources on a per-resource block basis (i.e. per sub-frame basis in the time domain) or on a transmission time interval (TTI) 6asis; wherein in the latter case it may be assumed that a TTI comprises one or more sub-frames in the time domain. In a further embodiment link adaptation techniques, such as adaptive modulation and coding (AMC), transmission power control and/or HARQ may be used for communication on the shared transport channel.

In one embodiment of the invention, the shared transport channel has 10 MHz bandwidth and consists out of 600 subcarriers with a subcarrier spacing of 15 kHz. The 600 subcarriers may then be grouped into 24 subbands (each containing 25 subcarriers), each subband occupying a bandwidth of 375 kHz. Assuming, that a sub-frame has a duration of 0.5 ms, a resource block (RB) spans over 375 kHz and 0.5 ms.

Alternatively, a subband may consist of 12 subcarriers, 50 of those subbands constituting the available 600 subcarriers. With a transmission time interval (TTI) of 1.0 ms, equivalent to 2 sub-frames, a resource block (RB) spans over 300 kHz and 1.0 ms in this example.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

In the previous paragraphs various embodiments of the invention and variations thereof have been described. It would be appreciated by a person skilled in the art that numerous variations and/or modifications may be made to the present invention as shown in the specific embodiments without departing from the spirit or scope of the invention as broadly described.

It should be further noted that most of the embodiments have been outlined in relation to a 3GPP-based communication system and the terminology used in the previous sections mainly relates to the 3GPP terminology. However, the terminology and the description of the various embodiments with respect to 3GPP-based architectures is not intended to limit the principles and ideas of the inventions to such systems.

Also the detailed explanations given in the Technical Background section above are intended to better understand the mostly 3GPP specific exemplary embodiments described herein and should not be understood as limiting the invention to the described specific implementations of processes and functions in the mobile communication network. Nevertheless, the improvements proposed herein may be readily applied in the architectures described in the Technological Background section. Furthermore the concept of the invention may be also readily used in the LTE RAN currently discussed by the 3GPP.

## Claims

1. A method for informing a mobile terminal on target cell-specific system information within a mobile communication system, the method comprising the step of:
instructing the mobile terminal to change connectivity or point of attachment from a source cell to a target cell by a control message sent from a radio resource control entity of the source cell,
wherein the control message comprises at least one pointer to target cell-specific system information.

2. The method according to claim 1, wherein target cell-specific system information comprises information relevant for establishing connectivity on the air interface of the target cell or information relevant for changing a point of attachment to the target cell.

3. The method according to claim 1 or 2, further comprising the step of receiving by the mobile terminal the target cell-specific system information in the target cell using the at least one pointer comprised in the control message.

4. The method according to one of claims 1 to 3, wherein the target cell-specific system information in the target cell is mapped to a fixed rate transport channel or a variable rate transport channel.

5. The method according to claim 4, wherein a pointer indicates the mapping of the target cell-specific system information to the fixed rate transport channel and/or the variable rate transport channel within the target cell.

6. The method according to one of claims 1 to 5, wherein a pointer comprises a system frame number starting from which scheduling information comprising transmission format and timing for at least a portion of the target cell-specific system information is valid.

7. The method according to claim 6, wherein upon retransmission of the control message by a radio resource control protocol, a medium access control protocol specific protocol data unit is transmitted indicating an updated system frame number or an updated scheduling information comprising transmission format and timing of at least a portion of the target-cell specific system information to the mobile terminal.

8. The method according to claim 5, wherein a control message indicates a retransmission period specifying the interval in which the target cell-specific system information is retransmitted in the target cell or an updated system frame number.

9. The method according to claim 8, wherein the mobile terminal determines an updated system frame number based on the system frame number and the retransmission period.

10. The method according to one of claims 4 to 9, wherein the fixed rate transport channel is a broadcast transport channel having a fixed transport format and
wherein the variable rate transport channel is a shared transport channel or broadcast transport channel with variable transport format.

11. The method according to one of claims 1 to 10, wherein the target cell-specific system information is transmitted in form of at least one system information block.

12. The method according to claim 11, wherein the pointer indicates whether a respective system information bock is mapped on a fixed rate transport channel and/or a variable rate transport channel within a target cell.

13. The method according to claim 12, wherein in case a system information block is mapped to the variable rate transport channel, the pointer indicates a transmission format and timing of a respective system information block on the variable rate transport channel.

14. The method according to claim 10 to 13, wherein in case a system information block is mapped to the fixed rate transport channel, the pointer specifies the position of the respective system information block on the fixed rate transport channel in the target cell and optionally the repetition cycle at which the respective system information block is retransmitted.

15. The method according to one of claims 5 to 14, further comprising the step of transmitting control information on a control channel associated to the variable rate transport channel, wherein the control information indicates the transmission format and timing of a respective system information block transmitted on the variable rate transport channel.

16. The method according to the claim 15, wherein the control information further comprises identification of the logical channel to transport channel mapping.

17. The method according to one of claims 1 to 16, wherein the pointer to the target cell-specific system information comprises information on the configuration of at least one variable rate transport channel to which at least a portion of the target cell-specific system information is mapped.

18. The method according to one of claims 1 to 17, wherein the control message comprises a portion of the target cell-specific system information.

19. The method according to one of claims 1 to 18, wherein at least a portion of the target cell-specific system information is simultaneously transmitted on at least two different resource blocks of the air interface of the mobile communication system.

20. The method according to claim 18 or 19, wherein said portion corresponds to information of at least one system information block.

21. The method according to one of claims 1 to 20, wherein the control message instructs the mobile terminal to attach to one out of plural potential neighboring cells.

22. The method according to one of claims 1 to 21, further comprising the step of receiving by the radio resource control entity controlling the source cell from a radio resource control entity controlling a neighboring cell at least one pointer to neighboring cell-specific system information.

23. The method according to claim 22, wherein the at least one pointer is received by the radio resource control entity of the source cell from the radio resource control protocol of the target cell via a frame protocol or application protocol message.

24. The method according to claim 22 or 23, further comprising the step of including the pointer received from the neighboring radio resource control entity to the control message if the neighboring cell is the target cell for a handover of the mobile terminal or if the neighboring cell is one of potential cells to which the mobile terminal attaches upon performing cell selection or cell reselection.

25. The method according to one of claims 1 to 24, wherein the mobile terminal's change of connectivity or attachment from a source cell to a target cell is part of a hard-handover procedure, a cell selection procedure or a cell reselection procedure.

26. The method according to one of claims 1 to 25, wherein target cell-specific system information related to dynamically changing system information in the target cell is pointed to by the pointer in the control message, while target cell-specific system information related to non-dynamically changing system information is comprised within the control message.

27. The method according to one of claims 1 to 25, wherein target cell-specific system information related to critical system information on the target cell is pointed to by the pointer in the control message, while target cell-specific system information related to non-critical system information is neither pointed to by the pointer comprised in the control message nor comprised within the control message.

28. The method according to claim 27, wherein critical system information is information necessary for performing a mobility procedure.

29. The method according to claim 27 or 28, wherein critical system information that has to be acquired by the mobile terminal to perform a hard-handover procedure is information on a common physical channels configuration in the target cell and/or information on a configuration of shared physical channels in the target cell.

30. The method according to claim 27 or 28, wherein critical system information that has to be acquired by the mobile terminal to perform a cell selection or cell reselection procedure is information on cell selection parameters for the target cell and/or information on the uplink interference in the target cell.

31. The method according to one of claim 1 to 30, wherein the target-cell specific system information is periodically transmitted within the target cell.

32. The method according to one of claims 1 to 31, wherein the control message is a radio resource control protocol message.

33. The method according to one of claims 1 to 32, wherein the target cell-specific system information is system information transmitted on a broadcast control logical channel of the target cell.

34. A radio resource control apparatus for informing a mobile terminal served by the by the radio resource control apparatus on target cell-specific system information within a mobile communication system, comprising:
a communication unit for instructing the mobile terminal to change connectivity or point of attachment from a source cell served by the by the radio resource control apparatus to a target cell by sending a control message to the mobile terminal,
wherein the control message comprises at least one pointer to target cell-specific system information within the target cell.

35. The radio resource control apparatus according to claim 34, wherein the communication unit is operable to receive a respective pointer to neighboring cell-specific system information from at least one neighboring cell.

36. The radio resource control apparatus according to claim 35, wherein at least one pointer received from a neighboring cell is included in the control message.

37. The radio resource control apparatus according to one of claims 34 to 36, wherein the control message is a dedicated message sent to the mobile terminal.

38. The radio resource control apparatus according to one of claims 34 to 37, wherein the communication unit is adapted to transmit a pointer on system information specific to the cell controlled by the radio resource control apparatus to at least one neighboring radio resource control apparatus.

39. The radio resource control apparatus according to claim 38, wherein the pointer on system information specific to the cell controlled by the radio resource control apparatus is sent in at least one application protocol or frame protocol message.

40. The radio resource control apparatus according to one of claims 34 to 39, further comprising means adapted to perform the method according to one of claims 1 to 33.

41. A mobile terminal for use in a mobile communication system comprising:
a communication unit for receiving a control message indicating to the mobile terminal to change connectivity or point of attachment from a source cell to a target cell, wherein the control message is received from a radio resource control apparatus of the source cell, and wherein the control message comprises at least one pointer to target cell-specific system information, and
wherein the mobile terminal is configured to attach or connect to the target cell using the pointer to the target cell-specific system information comprised in the control message.

42. The mobile terminal according to claim 41, further comprising means adapted to perform the method according to one of claims 1 to 33.

43. A communication system comprising a radio resource control apparatus according to one of claims 34 to 40 and a mobile terminal according to claim 41 and 42.

44. A computer readable medium storing instructions that, when executed by a processor of a radio resource control apparatus, cause the radio resource control apparatus to inform a mobile terminal served by the by the radio resource control apparatus on target cell-specific system information within a mobile communication system, by:
instructing the mobile terminal to change connectivity or point of attachment from a source cell served by the by the radio resource control apparatus to a target cell by sending a control message to the mobile terminal,
wherein the control message comprises at least one pointer to target cell-specific system information within the target cell.

45. The computer readable medium according to claim 44, further storing instructions that, when executed by the processor of the radio resource control apparatus, cause the radio resource control apparatus to perform the steps of the method according to one of claims 1 to 33.

46. A computer readable medium storing instructions that, when executed by a processor of a mobile terminal in a mobile communication system to:
receive a control message indicating to the mobile terminal to change connectivity or point of attachment from a source cell to a target cell, wherein the control message is received from a radio resource control apparatus of the source cell, and wherein the control message comprises at least one pointer to target cell-specific system information, and
attach or connect to the target cell using the pointer to the target cell-specific system information comprised in the control message.

47. The computer readable medium according to claim 46, further storing instructions that, when executed by the processor of the mobile terminal, cause the mobile terminal to perform the steps of the method according to one of claims 1 to 33.
